# EUROPEAN PATENT APPLICATION

(11) **EP 4 718 473 A1**
(43) Date of publication of application: **01.04.2026**
(21) Application number: 24849334.8
(22) Date of filing: 10.05.2024
(51) Int. Cl.: G21F 5/10, G21F 5/008, G21F 1/02

(54) **DRY STORAGE MODULE FOR SPENT NUCLEAR FUEL OF VERTICAL LIGHT WATER REACTOR, WITH IMPROVED AIR OUTLET POSITION AND CYLINDER BODY MOUNTING METHOD, AND STORAGE SYSTEM COMPRISING SAME**

(30) Priority: 28.07.2023 KR 20230099147
(71) Applicant: Korea Hydro & Nuclear Power Co., Ltd, Gyeongju-si, Gyeongsangbuk-do 38120 (KR)
(72) Inventor: KIM, Kiyoung, Daejeon 34101 (KR); KIM, Taehyeon, Daejeon 34101 (KR); KIM, Yongdeog, Daejeon 34101 (KR); ROH, Kyungho, Daejeon 34101 (KR); NA, Taehyung, Daejeon 34101 (KR); KIM, Beomkyu, Daejeon 34101 (KR); LEE, Donghee, Daejeon 34101 (KR); LEE, Gabbock, Daejeon 34101 (KR); SON, Jinwon, Daejeon 34101 (KR)
(74) Representative: Bryn Aarflot AS
(86) International application number: PCT/KR2024/006388
(87) International publication number: WO 2025/028762

(57) **Abstract**

The present invention relates to a dry storage module for the spent nuclear fuel of a vertical light water reactor, and to a dry storage module with an improved air outlet and cylinder body mounting method, and a system comprising same, the module comprising: a case for forming a hexahedral accommodation space; a plurality of storage parts, which are arranged in two rows in the accommodation space, store the spent nuclear fuel and are elongated; a hexahedral module part for accommodating the storage parts; canisters in which the spent nuclear fuel is loaded; cylinder bodies each encompassing the canister; cylinder supports for attaching/detaching the cylinder body to/from the module part; an air inlet positioned at a side of the upper portion of the case; an air outlet positioned in the lower portion of the case; and shielding grids disposed in each of the inlet and the outlet.

## Description

### Technical Field

The present disclosure relates to a dry storage module of a vertical type for storing spent nuclear fuel of a light water reactor, and to a storage system including the same. More particularly, the present disclosure relates to a dry storage module of a vertical type for storing spent nuclear fuel of a light water reactor, in which an air outlet position and a cylinder body mounting method are improved, and to a storage system including the same.

### Background Art

Unless otherwise specified in the present specification, the contents described in this section are not related art with respect to the claims of this application, and inclusion in this section should not be construed as an admission that such contents are related art.

In general, spent nuclear fuel generated at a nuclear power plant is stored in water in a storage pool, and when the storage capacity is exceeded, it is stored in a separate dry storage system. In the dry storage system, a canister loaded with spent nuclear fuel is placed in an individual cask or an individual module, and external air is naturally circulated inside to cool the canister and dissipate the heat of the nuclear fuel.

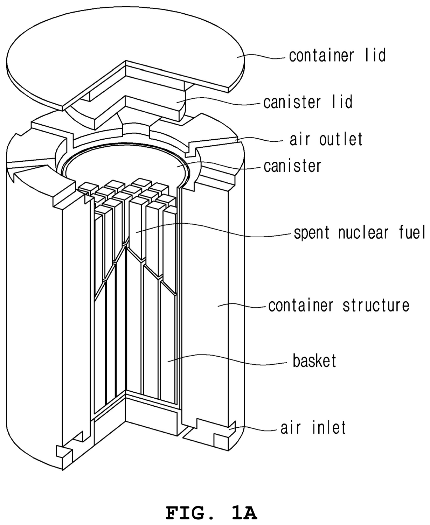

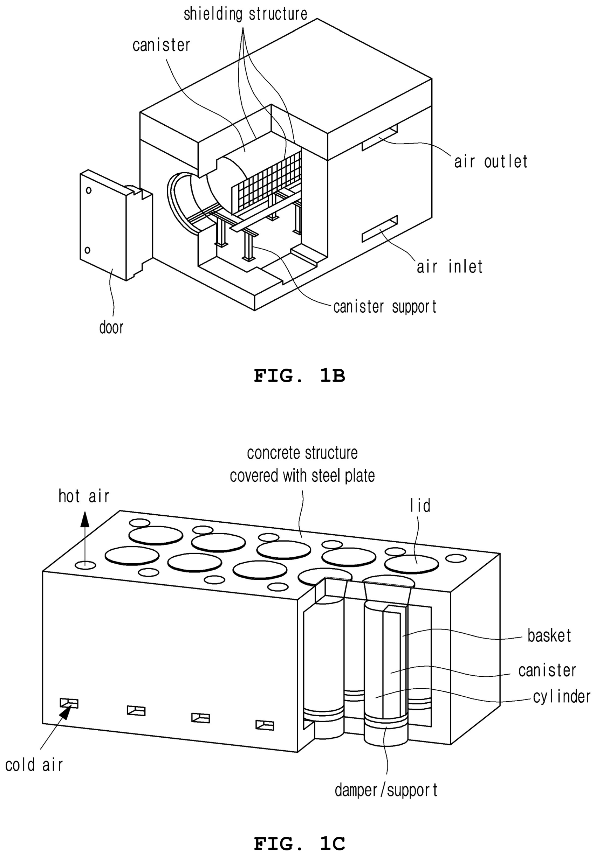

Conventional dry storage systems are classified into a storage cask method, in which a canister loaded with nuclear fuel is stored vertically in a single cylindrical storage cask, and a horizontal module method, in which the canister is stored horizontally in a single rectangular storage module. FIGS. 1a and 1b illustrate the conventional dry storage system of the storage cask type and the horizontal module type, respectively.

As illustrated, in the conventional dry storage system, each canister loaded with nuclear fuel is individually stored in a storage cask or a storage module, and a plurality of storage casks or modules are arranged in a matrix at a nuclear power plant site. In such a case, a large site area is required.

Furthermore, in order to address the above-mentioned problems, the applicant rearranged present disclosure previously obtained Korean Patent No. 10-20236458, which is directed to an invention in which, in a dry storage module of a vertical type for storing spent nuclear fuel of a light water reactor, an air outlet formed on a side surface of a case (see FIG. 1c) was rearranged to an upper surface of the case to improve cooling performance. However, this design caused an issue of radiation exposure to workers, and when the cylinder body deteriorated, aged, or corroded, practical problems arose in performing maintenance.

Accordingly, there is a need for an improved dry storage module and system for storing spent nuclear fuel that enables efficient use of a limited site area of a nuclear power plant for storing the spent nuclear fuel, resolves radiation exposure issues for workers, and addresses maintenance problems associated with aged or deteriorated cylinder bodies.

### [Documents of Related Art]

### [Patent Document]

Patent Document 1: Korean Patent No. 10-2036458 (published Oct. 24, 2019)

### Disclosure

### Technical Problem

The present disclosure is directed to provide an improved technology over existing inventions by improving an air outlet and a cylinder body mounting method in a dry storage module of a vertical type for storing spent nuclear fuel of a light water reactor. An objective of the present disclosure is to enable efficient use of a limited site area for storing spent nuclear fuel, to resolve the problem of radiation exposure issues for workers, and to address maintenance issues associated with aged or deteriorated cylinder bodies.

It should be understood that the technical objectives of the present disclosure are not limited to those described above, and other technical objectives may be derived from the following description.

### Technical Solution

According to an embodiment of the present disclosure, a dry storage module of a vertical type for storing spent nuclear fuel of a light water reactor, having an improved air outlet position and a cylinder body mounting method, the dry storage module may include: a case forming a cuboid-shaped accommodation space; and a plurality of storage units, arranged in two rows in a matrix within the accommodation space and configured to store the spent nuclear fuel, each of the storage units being elongated, wherein each storage module may include: a canister into which the spent nuclear fuel is loaded; and a cylinder body surrounding an exterior of the canister so as to prevent the canister from being exposed to air, wherein the cylinder body is detachably mounted to a cylinder support fixed to the storage module; wherein the storage module may further include: at least two air inlets arranged at a lower side surface of the case; and at least two air outlets arranged at an upper side surface of the case for discharging air introduced through the air inlets, wherein each of the air inlets and the air outlets may include a shielding grid, and an air passage may be formed therebetween, wherein the air inlets and the air outlets may be arranged such that the air passage extends along the longitudinal direction of the storage units, wherein the air passage may be formed outside the storage units arranged in two rows in a matrix.

In an exemplary embodiment, the cylinder support may be separable into an upper support and a lower support, flange-coupled to each other.

In an exemplary embodiment, the cylinder body may be provided with a lateral movement prevention structure at its lower end.

In an exemplary embodiment, the case may have a width in the range of 15 m to 25 m and a length in the range of 5 m to 10 m.

In an exemplary embodiment, through-holes may be formed on an upper surface of the case, and the module unit may further include: a sealing cover configured to open and close each through-hole to allow access to the storage units and to prevent leakage of radioactive material from the spent nuclear fuel.

In an exemplary embodiment, the through-holes may be arranged in a matrix.

In an exemplary embodiment, the cylinder body may be made of at least one material selected from carbon steel, tungsten, tin, copper, aluminum, and alloys thereof.

In an exemplary embodiment, the cylinder body may include: a main body made of carbon steel, and a coating formed on at least part of a surface of the main body, the coating being made of at least one material selected from zinc, aluminum, and copper.

In an exemplary embodiment, the sealing cover may be made of reinforced concrete surrounded by a steel plate liner having a thickness of 1 mm to 5 mm.

In an exemplary embodiment, a vertical dry storage system for storing spent nuclear fuel of a light water reactor, the dry storage system may include: a plurality of dry storage modules of a vertical type, the dry storage modules being arranged in a matrix.

### Advantageous Effects of the Invention

According to the present disclosure, the following effects may be achieved: efficient utilization of a limited site area of a nuclear power plant for storing spent nuclear fuel, a significant reduction in radiation exposure to workers, and resolution of maintenance problems associated with a cylinder body mounted in the dry storage module of a vertical type.

The advantageous effects of the present disclosure are not limited to those described above, but also encompass all effects that may be inferred from the detailed description and the claims.

### Description of Drawings

FIG. 1a is a sectional perspective view of a conventional dry storage cask for storing spent nuclear fuel.
FIG. 1b is a sectional perspective view of a conventional horizontal dry storage module.
FIG. 1c is a sectional perspective view of a dry storage module of a vertical type for storing spent nuclear fuel of a light water reactor according to an existing patent.
FIGS. 2a and 2b are schematic sectional perspective views of a dry storage module of a vertical type for storing spent nuclear fuel of a light water reactor, having an improved air outlet position and an improved cylinder body mounting method according to an embodiment of the present disclosure.
FIG. 3 is an enlarged sectional perspective view of a main portion of the dry storage module of a vertical type for storing spent nuclear fuel of a light water reactor, having an improved air outlet position and an improved cylinder body mounting method according to an embodiment of the present disclosure.
FIG. 4 is a schematic sectional view of a main portion of the dry storage module of a vertical type for storing spent nuclear fuel of a light water reactor, having an improved air outlet position and an improved cylinder body mounting method according to an embodiment of the present disclosure.
FIG. 5 is a schematic view of a vertical dry storage system for storing spent nuclear fuel of a light water reactor, having an improved air outlet position and an improved cylinder body mounting method according to an embodiment of the present disclosure.

### Best Mode

Hereinafter, with reference to the accompanying drawings, a dry storage module of a vertical type for storing spent nuclear fuel of a light water reactor with an improved air outlet position and a cylinder body mounting method according to an exemplary embodiment of the present disclosure, and a storage system including the same, will be described in detail.

For reference, in the drawings described below, each component may be omitted or schematically illustrated for convenience and clarity, and the size of each component does not reflect the actual scale. In addition, throughout the specification, same reference numerals denote like components, and reference numerals of the same components may be omitted in individual drawings.

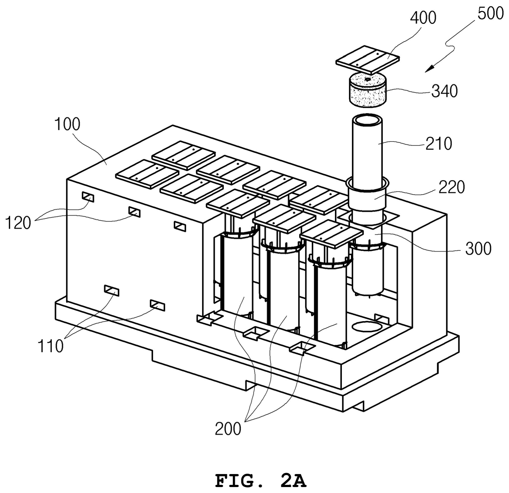

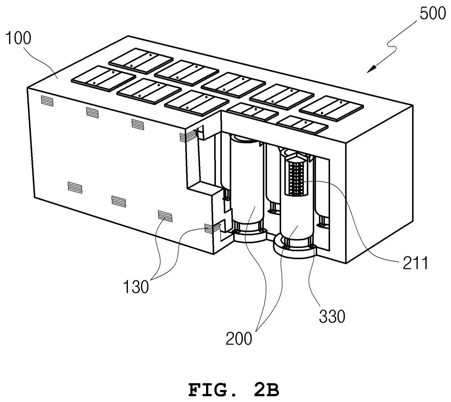

To describe an embodiment of the present disclosure with reference to FIGS. 2 to 5, a dry storage module of a vertical type 500 for storing spent nuclear fuel of a light water reactor, having an improved air outlet position and an improved cylinder body mounting method, in a dry storage module of a vertical type for storing spent nuclear fuel, which stores spent nuclear fuel used in a light water reactor, the dry storage module of a vertical type includes: a case 100 forming a cuboid-shaped receiving space; and a plurality of storage units, which are arranged in two rows in a matrix within the accommodation space and are configured to store the spent nuclear fuel, each of the storage units being elongated, wherein the dry storage module of a vertical type further includes cuboid-shaped storage modules 500, which accommodate the storage units 200 in the accommodation space such that the longitudinal direction of the storage units 200 is arranged to be parallel to the vertical direction with respect to the ground, wherein each of the storage units 200 includes: a canister 210 configured to load spent nuclear fuel; and a cylinder body 220 surrounding the outer surface of the canister 210 to prevent contact with air, wherein the cylinder body 220 is detachably mounted to a cylinder support 300 fixed to the storage module 500, wherein the storage module 500 further includes: at least two air inlets 110 arranged at the lower side of the case 100; and at least two air outlets 120 arranged at the upper side of the case 100, through which air introduced from the air inlets 110 is discharged, wherein each of the air inlets 110 and air outlets 120 includes a shielding grid 130, and an air passage is formed therebetween, wherein the air inlets 110 and air outlets 120 are arranged such that the air passage extends along the longitudinal direction of the storage units 200, wherein the air passage is formed outside the storage units 200 arranged in a two-row matrix configuration.

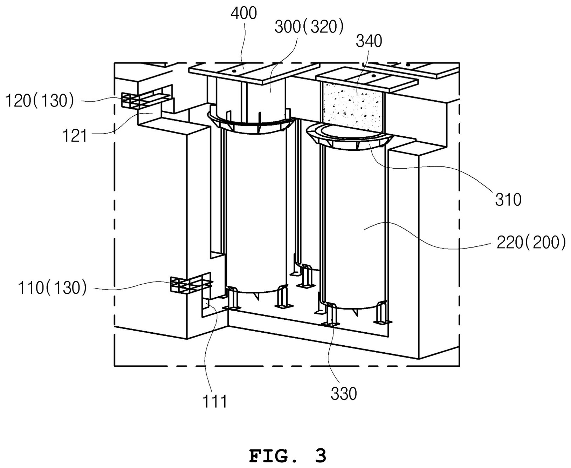

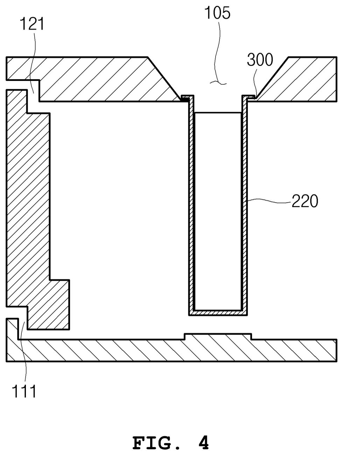

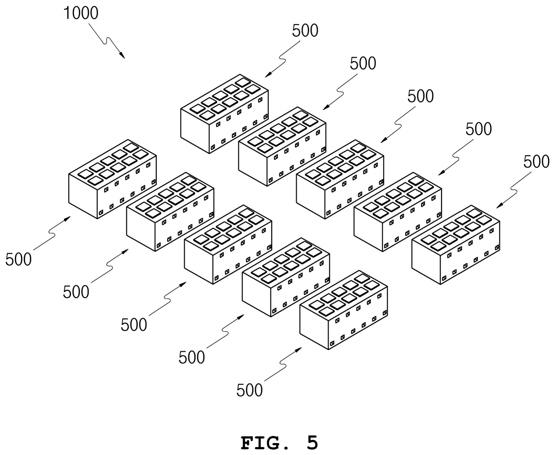

To look more specifically through drawings, FIGS. 2a and 2b show an overall sectional perspective view of the dry storage module of a vertical type 500, for storing spent nuclear fuel of a light water reactor, having an improved position of the air outlet 120 and an improved mounting method of the cylinder body 220, according to the embodiment of the present disclosure, FIG. 3 shows an enlarged sectional perspective view of a main portion of the dry storage module of a vertical type 500, for storing spent nuclear fuel of a light water reactor, having an improved position of the air outlet 120 and an improved mounting method of the cylinder body 220, according to the embodiment of the present disclosure, and FIG. 4 shows a schematic sectional view of a main portion of the dry storage module of a vertical type 500, for storing spent nuclear fuel of a light water reactor, having an improved position of the air outlet 120 and an improved mounting method of the cylinder body 220, according to the embodiment of the present disclosure, and FIG. 5 shows a schematic view of a vertical dry storage system 1000, for storing spent nuclear fuel of a light water reactor, having an improved position of the air outlet 120 and an improved mounting method of the cylinder body 220, according to the embodiment of the present disclosure.

As shown in the drawings, the dry storage module of a vertical type 500, for storing spent nuclear fuel of a light water reactor, which stores spent nuclear fuel 211 used in the light water reactor according to the embodiment of the present disclosure includes:
a cuboid-shaped storage modules 500 and the plurality of storage units 200.
The plurality of storage units 200, each extending longitudinally, is configured to store spent nuclear fuel 211, and the storage module 500 includes a case 100 forming a cuboid-shaped accommodation space to accommodate the storage module 200, such that the longitudinal direction of the storage module 200 is oriented parallel to the vertical direction relative to the ground surface.

As shown in FIGS. 2a and 2b, the storage units 200 may be arranged in a matrix within the accommodation space of the case 100. In addition, as shown in FIG. 4, the storage units 200 may be installed in a floating state, spaced apart from the bottom part of the case 100. Each storage module 200 may include a canister 210 that stores spent nuclear fuel 211 and a cylinder body 220 surrounding the canister 210.

When the storage units 200 are vertically arranged in the accommodation space of the case 100 to store the same bundle of spent nuclear fuel 211, the area occupied by each cask or module may be reduced compared to conventional systems, in which one canister 210 is loaded per cask or horizontal module, thereby reducing the required installation footprint. In other words, the dry storage module of a vertical type 500, for light water reactor spent nuclear fuel, according to the present disclosure may efficiently increase storage capacity per unit area, effectively reducing the site area required to store the same number of canisters 210.

As shown in FIGS. 2a and 2b, the case 100 may have a width of 10 to 40 m, preferably 12 to 35 m, and more preferably 15 to 25 m, and a depth of 1 to 20 m, preferably 3 to 25 m, and more preferably 5 to 10 m, which may vary depending on the number and arrangement of the canisters 210 accommodated in the storage module 500. Preferably, the case 101 accommodates conventional canisters 210 in a 2×5 array. The height of the case 100 may also vary depending on the height of the canisters 210, the cylinder supports 300, additional components, and the air passage.

As shown in FIGS. 2a and 4, a through-hole 105 is formed on the top surface of the case 100. The storage module 500 includes a sealing cover 400 that opens and closes the through-hole 105 to allow access to the storage units 200 while preventing the release of radioactive material from the spent nuclear fuel 211. The through-holes 105 are also arranged in a matrix, but are not limited thereto.

Each storage module 20 includes a fuel basket and a canister 210 for storing spent nuclear fuel 211, and a cylinder body 220 that surrounds the canister 210 and is detachably mounted within the inner space of the case 100. The cylinder body 220 seals the canister 210 to prevent direct contact of the canister 210 with external air, thereby preventing corrosion of the canister 210, providing radiation shielding, and preventing the release of radioactive material. A lid-type sealing cover 109 is provided on an upper portion of the cylinder body 220 to allow convenient access to the canister 210.

The sealing cover 400 may be made of reinforced concrete surrounded by a steel plate liner. The thickness of the sealing cover 400 may range from 0.5 mm to 10 mm, preferably from 1 mm to 5 mm. The shape of the sealing cover 400 may be square, circular, or other suitable shape.

As shown in FIGS. 2a, 2b, and 3, the cylinder body 220 may be cylindrical, surrounding a typical canister 210 having a height of approximately 5 m and a diameter of approximately 2 m, although other dimensions and shapes are also possible

The cylinder body 220 may be formed of a material having internal corrosion resistance against salts, which may differ from stainless steel that is typically used for the canisters 210. Preferably, the cylinder body 220 may be made of at least one of carbon steel, tungsten, tin, copper, aluminum, or an alloy thereof.

The cylinder body 220 may include a body portion and a coating provided on at least part of a surface of the body portion. The body portion may be formed of carbon steel, and the coating may be formed of at least one of zinc, aluminum, or copper.

As shown in FIGS. 3 and 4, a cylinder support 300 may be positioned at an upper portion of the cylinder body 220. The cylinder support 300 may support the weight of the cylinder body 220 containing the spent nuclear fuel 211 and may allow the cylinder body 220 to be detachably maintained for maintenance in case of aging, degradation, or corrosion.

Specifically, the cylinder support 300 may include a conical lower support 310 on which a circular top portion of the cylinder body 220 may rest, and an upper support 320 that may be flange-coupled to the lower support 310. The conical lower support 310 may be fixed by fastening means such as screws, bolts, or welding.

In addition, a flange coupling between the lower support 310 and the upper support 320 may be secured by conventional fastening means such as bolts, nuts, or welding.

Furthermore, the cylinder support 300 may be formed of stainless steel, and an interior of the upper support 320 may be filled with concrete 340 so as to seal a top portion of the cylinder body 220 when flange-coupled with the lower support 310. A sealing cover 400 may be disposed on the concrete-filled upper support 320 to provide radiation shielding.

The cylinder body 220 supported by the cylinder support 300 may be fixed in a floating state above a bottom surface of the case 100, thereby allowing vertical load support and enabling easy removal of the cylinder body 220 for maintenance by separating the sealing cover 400 and the flange-coupled supports 310 and 320.

Since the canister 210 storing the spent nuclear fuel 211 may have an internal temperature of about 100°C to 200°C depending on storage conditions, thermal expansion may occur. The cylinder body 220 surrounding the canister 210 may also expand. By supporting the cylinder body 220 in the floating state on the cylinder support 300, the cylinder body 220 may expand downward without damaging upper fixed portions or a sealing cover, thereby solving problems associated with thermal expansion in conventional structures.

Meanwhile, as shown in FIGS. 2b and 3, a lateral movement preventing member 130 for restraining a lower end portion of the cylinder body 220 in a lateral direction may be installed on a bottom surface of an inner space of the case 100. The lateral movement preventing member 130 may prevent the cylinder body 220 from swaying due to external impacts applied to the storage module 500 by an earthquake or the like, thereby preventing damage caused by oscillation. The lateral movement preventing member 130 may be implemented in various forms, and may include any means capable of preventing oscillation of the cylinder body 220 against external impacts.

In addition, the storage module 500 of the present disclosure may include at least two air inlets 110 arranged at a lower portion of a side surface of the case 100, and at least two air outlets 120 disposed in a cross arrangement at an upper portion of the side surface of the case 100, through which air introduced into the air inlets 110 may be discharged.

Further, each air inlet 110 may be formed at a position on the side surface of the case 100 corresponding to a height similar to that of a lower end portion of the cylinder body 220, and a position, shape, diameter, number, and the like of the air inlet 110 may be variously modified depending on ground and geological conditions.

At this time, as illustrated in FIGS. 2b, 3, and 4, by configuring the lower air inlet 110 and the upper air outlet 120 along a path including stepped portions 111 and 121 in consideration of the rectilinearity of radiation, it is possible to effectively ensure shielding performance for workers while maintaining the thickness of the concrete structure.

In addition, as shown in FIGS. 2b and 3, shielding grids 130 may be further provided at the lower air inlets 110 and the upper air outlets 120 to enhance shielding performance against scattered radiation in the air. Specifically, radiation propagates linearly and then scatters after colliding with a wall, and by providing the shielding grid 130 in the airflow path, the number of scattering events may be increased, thereby reducing the exposure dose to workers near the air inlets 110 and air outlets 120 due to scattered radiation.

Further, by arranging the air inlets 110 and the air outlets 120 in a cross pattern on a side surface of the case 100, it is possible to prevent adverse effects on the spent nuclear fuel storage system caused by natural phenomena such as snow or rain.

As described above, an airflow path is formed between the air inlets 110 and the air outlets 120 of the present disclosure, and the air inlets 110 and the air outlets 120 are arranged such that the airflow path extends along a longitudinal direction of the storage module 200. Air introduced into the air inlets 110 may be discharged through the air outlets 120 via the airflow path, and through such natural convection cooling, decay heat generated from the spent nuclear fuel 211 stored in the canister 210 may be effectively dissipated.

According to an exemplary embodiment of the present disclosure, as shown in FIG. 5, a plurality of the dry storage module of a vertical types 500, for storing spent nuclear fuel of a light water reactor, may be arranged in a matrix to constitute a vertical dry storage system 1000. That is, the dry storage module of a vertical types 500, for storing spent nuclear fuel of a light water reactor, according to the present disclosure have the advantage that they may be easily additionally installed.

Although preferred embodiments of the present disclosure have been described with reference to the accompanying drawings, the embodiments described in the specification and the configurations shown in the drawings are merely exemplary of preferred embodiments of the present disclosure and do not represent the full technical scope of the present disclosure. Therefore, it should be understood that various equivalents and modifications that may be made at the time of filing may exist. Accordingly, the embodiments described above are illustrative in all respects and not restrictive, and the scope of the present disclosure is defined by the claims set forth below rather than by the foregoing detailed description. It should be interpreted that all changes and modifications derived from the meaning, scope, and equivalents of the claims are included within the scope of the present disclosure

### [Description of the Reference Numerals in the Drawings]

100: Case, 105: Through-hole, 110: Air inlet, 111: Step portion, 120: Air outlet, 121: Step portion, 130: Shielding grid, 200: Storage module, 210: Canister, 211: Spent nuclear fuel, 220: Cylinder body, 300: Cylinder support, 310: Lower support, 320: Upper support, 330: Lateral movement prevention structure, 340: Concrete filling, 400: Sealing cover, 500: dry storage module of a vertical type for storing spent nuclear fuel of light water reactor, having improved air outlet position and improved cylinder body mounting method, 1000: vertical dry storage system for storing spent nuclear fuel of light water reactor, having improved air outlet position and improved cylinder body mounting method

## Claims

1. A dry storage module of a vertical type for storing spent nuclear fuel of a light water reactor, the dry storage module comprising:
a case forming a cuboid-shaped accommodation space; and
a plurality of storage units arranged in two rows in a matrix within the accommodation space and configured to store the spent nuclear fuel, each of the storage units being elongated,
wherein each storage unit includes:
a canister into which the spent nuclear fuel is loaded; and
a cylinder body surrounding an exterior of the canister so as to prevent the canister from being exposed to air, the cylinder body being detachably mounted to a cylinder support fixed to the storage module,
wherein the storage module further comprises:
at least two air inlets arranged at a lower side surface of the case; and
at least two air outlets arranged at an upper side surface of the case, for discharging air introduced through the air inlets,
wherein each of the air inlets and the air outlets includes a shielding grid (130), and an air passage is formed therebetween,
wherein the air inlets and the air outlets are arranged such that the air passage extends along the longitudinal direction of the storage units,
wherein the air passage is formed outside the storage units arranged in two rows in a matrix.

2. The dry storage module of claim 1, wherein the cylinder support is separable into an upper support and a lower support, flange-coupled to each other.

3. The dry storage module of claim 1, wherein the cylinder body is provided with a lateral movement prevention structure at its lower end.

4. The dry storage module of claim 1, wherein the case has a width in the range of 15 m to 25 m and a length in the range of 5 m to 10 m.

5. The dry storage module of claim 1, wherein through-holes are formed on an upper surface of the case, and
the module unit further comprises:
a sealing cover configured to open and close each through-hole to allow access to the storage units and to prevent leakage of radioactive material from the spent nuclear fuel.

6. The dry storage module of claim 5, wherein the through-holes are arranged in a matrix.

7. The dry storage module of claim 1, wherein the cylinder body is made of at least one material selected from carbon steel, tungsten, tin, copper, aluminum, and alloys thereof.

8. The dry storage module of claim 1, wherein the cylinder body comprises:
a main body made of carbon steel; and
a coating formed on at least part of a surface of the main body, the coating being made of at least one material selected from zinc, aluminum, and copper.

9. The dry storage module of claim 5, wherein the sealing cover is made of reinforced concrete surrounded by a steel plate liner having a thickness of 1 mm to 5 mm.

10. A dry storage system for storing spent nuclear fuel of a light water reactor, the dry storage system comprising:
a plurality of dry storage modules according to any one of claims 1 to 9, the dry storage modules being arranged in a matrix.
